(19) Europäisches Patentamt
European Patent Office
Office européen des brevets

(11) Publication number: **0 474 924 A1**

# (12) EUROPEAN PATENT APPLICATION

(21) Application number: **90202428.0**

(51) Int. Cl.$^5$: **C08F 218/08**

(22) Date of filing: **12.09.90**

(43) Date of publication of application:
**18.03.92 Bulletin 92/12**

(84) Designated Contracting States:
**AT BE CH DE DK ES FR GB GR IT LI LU NL SE**

(71) Applicant: **AMERICAN CYANAMID COMPANY**
**One Cyanamid Plaza**
**Wayne New Jersey 07470(US)**

(72) Inventor: **Vafa, Manaf A.**
**O.van Cralingenpark 102**
**NL-3065 BC Rotterdam(NL)**
Inventor: **Saly, Erik**
**K. Stamperiusflat 79**
**NL-3333 CG Zwijndrecht(NL)**

(74) Representative: **de Bruijn, Leendert C. et al**
**Nederlandsch Octrooibureau**
**Scheveningseweg 82 P.O. Box 29720**
**NL-2502 LS 's-Gravenhage(NL)**

## (54) Composition comprising an emulsion copolymer of at least an alkylacrylamido glycolate alkylether, vinylacetate and a functional hydroxy containing monomer as well as a process for preparing the same.

(57) The invention relates to a composition comprising an emulsion copolymer of an alkyl acrylamido glycolate alkylether, vinyl acetate, and a functional hydroxide containing monomer, a process for its preparation as well as its use as binder, coating, or adhesive, in particular as a self-crosslinking binding composition. The preferred alkyl acrylamido glycolate alkylether is methylacrylamido glycolate methylether (MAGME).

EP 0 474 924 A1

The invention relates to a composition comprising an emulsion copolymer of at least an alkylacrylamido glycolate alkylether, vinylacetate and a functional hydroxy containing monomer.

In particular, the present invention relates to a specific use of alkylacrylamido glycolate alkylethers having the formula

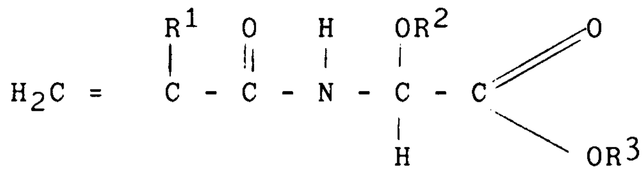

(I)

wherein $R^1$ is hydrogen or methyl, preferably hydrogen; $R^2$ and $R^3$ are independently selected from $C_1$-$C_6$ alkyl and $C_5$-$C_6$ cycloalkyl, preferably $C_1$-$C_4$ alkyl.

The use of said glycolate ethers having the formula (I) in the field of polymers is generally known, e.g. from US-A-4 522 973. This reference relates to a low temperature cross-linkable emulsion of a polymer containing repeating units derived from the monomer having the formula (I) and a cross-linking agent having a plurality of primary amine groups. Repeating units of unsaturated comonomers may be present too, e.g. alkyl-esters of acrylic and methacrylic acid, styrene, vinylacetate, butadiene, ethylene, cyclopentadiene, acrylonitril and vinylchloride. A preferred compound having the formula (I) is methylacrylamido glycolate methylether (MAGME) available from American Cyanamid Co.. A serious drawback of the emulsion polymers of this reference is the use of a two-pack system. Furthermore, amine cure is required. For, it appeared that complete self-crosslinking will not occur on heating. According to the examples relatively high levels of MAGME are required. In addition, the use of monomers having hydroxy functionality is not mentioned.

EP-A-0 302 588 discloses formaldehyde free binder compositions formed by polymerization of compounds having the formula (I) and a comonomer such as acrylic and methacrylic acid (or esters thereof), styrene, vinylesters such as vinylacetate etc., wherein said composition also contains a reactive function such as hydroxy, carboxy, and amido. In the examples MAGME is used, however not in combination with vinylacetate.

EP-A-0 218 827 relates to formaldehyde free polymers in which the compounds having the formula (I) may be used. It is stated that "acryl amide/glyoxylic condensates and their ethers and esters have been used. These materials have not performed well in applications with vinylacetate - ethylene emulsions ....".

The use of compounds having the formula (I) is further described in e.g. US-A-4 743 498 (Kedrowski), US-A-4 454 301 (Cady), US-A-4 778 869 (Schirmann), US-A-4 656 308 (Schirmann), US-A-4 689 264 (Fink).

In the leaflet "MAGME* 100, multifunctional acrylic monomer" available from American Cyanamid Company, Polymer Products Division, One Cyanamid Plaza, WAYNE, New Jersey 07470, U.S.A. the properties and applications of MAGME have been summarized. On page 5 of this leaflet the following table is given:

| Copolymerization parameters of MAGME with various vinyl monomers | | | |
|---|---|---|---|
| Monomer I | Monomer II | $r_1$ | $r_2$ |
| MAGME | Styrene | 0.21 ± .3 | 0.36 ± .4 |
| | Acrylonitrile | 0.66 ± .32 | 0.67 ± .24 |
| | Methyl Methacrylate | 1.27 ± .32 | 0.95 ± .20 |
| | Butyl Acrylate | 3.10 ± .19 | 1.03 ± .04 |
| | Ethyl Acrylate | 3.26 ± .25 | 0.78 ± .04 |
| | Vinyl Acetate | 38.2 ± 3.2 | 0.10 ± .03 |

On the basis of the above copolymerization parameters an average expert in the field of emulsion copolymerization would refrain from using MAGME in combination with vinylacetate.

According to the present invention a composition comprising a copolymer of a compound having the formula (I), vinylacetate and at least one other functional hydroxy containing monomer having surprising properties is provided. Various drawbacks of the prior art are overcome by the present invention.

The present invention relates to a composition comprising a copolymer of

a) 0.1-25 % by wt. of an alkyl acrylamidoglycolate alkylether having the formula

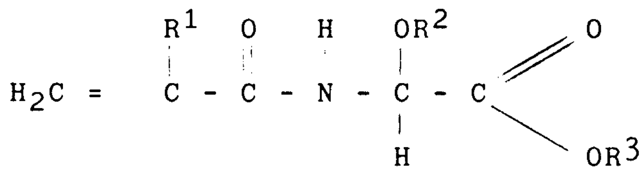

(I)

wherein
$R^1$ is hydrogen or methyl, preferably hydrogen;
$R^2$ and $R^3$ are independently selected from $C_1$-$C_6$ alkyl and $C_5$-$C_6$ cycloalkyl, preferably $C_1$-$C_4$ alkyl;
b) 50-95 % by wt. of vinylacetate;
c) 0.1-25 % by wt. of functional hydroxy containing monomer;
d) 0-50 % by wt. of another vinyl monomer,
the amounts of the components a)-d) being calculated on the weight of the total composition.

Preferably, the composition according to the invention comprises
0.5 - 10 % by wt. of component a);
80 - 90 % by wt. of component b);
0.5 - 10 % by wt. of component c);
5 - 20 % by wt. of component d);
the amounts of the components a)-d) being calculated on the weight of the total composition.

In particular, in the composition according to the invention component a) is methylacrylamidoglycolate methylether (MAGME); component c) is 2-hydroxyethylacrylate (2EHA) and/or hydroxyethylmethacrylate (HEMA) or another external hydroxy containing compound selected from polyol, polyvinylalcohol and cellulosic compounds; component d) is an alkylester of acrylic or methacrylic or maleic acid such as butylacrylate (BA), methylmethacrylate (MMA), dibutylmaleate (DBM), vinylchloride, vinylidene chloride, butadiene, ethylene and/or propylene.

Surprising and important properties of the composition according to the present invention are:
- free formaldehyde system,
- high solvent and water resistance of the cured product,
- good adhesion to substrates such as polyester,
- excellent gloss.

Because component a) (e.g. MAGME) is not prepared from compounds derived from formaldehyd, the possibility of formaldehyde emission from the crosslinked film under acid and cure conditions is eliminated.

It is well-known in the art that vinylacetate (component b) is hydrophilic and that vinylacetate copolymers have poor resistance to water and solvents. Therefore it is surprising that the composition according to the invention, which consists for the larger part of vinylacetate units, is solvent resistant. The films of the composition according to the invention have a very short curing time, e.g. 5 minutes/130 °C at pH 1.5-3.

The process for copolymerization the monomers in order to obtain a composition according to the invention requires gradual addition of component a) (power feed addition) in such a way that homopolymerization of MAGME is avoided. The rate of addition is determined and calculated using the reactivity parameters. In case MAGME is used as component a), the rate of addition of MAGME is calculated with the reactivity ratio's $r_1$ and $r_2$ and their concentrations in the monomer mixture. The addition system corresponds to the following power feed calculation, on which the data in tables A, B, and C are based.

$$\text{ratio} = \frac{M1 - M1 * \delta t * Va / A + M1b * \delta t * Vb / B0}{M2 - M2 * \delta t * Va / A + M2b * \delta t * Vb / B0}$$

$$\frac{\delta m1}{\delta m2} = \frac{M1 * (r1*M1 + M2)}{M2 * (r2*M2 + M1)}$$

$$\frac{\delta m1}{\delta m2} = \frac{\text{amount of MAGME entering polymer}}{\text{amount of VA entering polymer}}$$

where:

M1 = amount of MAGME in feed A (g) or (mol)
M1b = amount of MAGME in feed B (g) or (mol)
M2 = amount of VA in feed A (g) or (mol)
M2b = amount of VA in feed B (g) or (mol)
A = content of feed A (g)
B0 = original content of feed B (g)
Va = addition speed of feed A (g/min)
Vb = addition speed of feed B (g/min)
δt = time interval used for calculation (min)

Column "MAGME" lists the total amount of MAGME added to the reactor.
r1 and r2 are the copolymerization parameters for the MAGME/VA system.

Table A

COPOLYMERIZATION CALCULATIONS OF 1% MOLAR MAGME IN VA

1 = MAGME 2= VA

r1= 38.2 r2= .1
m1a= .00751 moles m1b= .0173 moles
m2a= .5 moles m2b= 1.5 moles
a= 51 g charge b= 157 g charge

| time | magme | ratio | dm1/dm2 |
|---|---|---|---|
| 0 | | 0.015020 | 0.20551 |
| 5 | .143931 | 0.0156 | 0.20047 |
| 10 | .2848026 | 0.0146 | 0.19575 |
| 15 | .4228076 | 0.0146 | 0.19133 |
| 20 | .5581321 | 0.0146 | 0.18721 |
| 25 | .690956 | 0.0146 | 0.18338 |
| 30 | .8214523 | 0.0136 | 0.17981 |
| 35 | .9497881 | 0.0136 | 0.17651 |
| 40 | 1.076124 | 0.0136 | 0.17346 |
| 45 | 1.200613 | 0.0136 | 0.17065 |
| 50 | 1.323403 | 0.0136 | 0.16806 |
| 55 | 1.444636 | 0.0136 | 0.16570 |
| 60 | 1.564446 | 0.0126 | 0.16354 |
| 65 | 1.682962 | 0.0126 | 0.16158 |
| 70 | 1.800307 | 0.0126 | 0.15981 |
| 75 | 1.916596 | 0.0126 | 0.15822 |
| 80 | 2.031938 | 0.0126 | 0.15679 |
| 85 | 2.146438 | 0.0126 | 0.15552 |
| 90 | 2.260193 | 0.0126 | 0.15439 |
| 95 | 2.373294 | 0.0126 | 0.15341 |
| 100 | 2.485825 | 0.0126 | 0.15255 |
| 105 | 2.597866 | 0.0126 | 0.15182 |
| 110 | 2.709489 | 0.0126 | 0.15119 |
| 115 | 2.820762 | 0.0126 | 0.15066 |
| 120 | 2.931744 | 0.0126 | 0.15023 |
| 125 | 3.042492 | 0.0126 | 0.14987 |
| 130 | 3.153053 | 0.0126 | 0.14959 |
| 135 | 3.263471 | 0.0126 | 0.14938 |
| 140 | 3.373782 | 0.0126 | 0.14922 |
| 145 | 3.484019 | 0.0126 | 0.14911 |
| 150 | 3.594208 | 0.0126 | 0.14903 |
| 155 | 3.704368 | 0.0126 | 0.14899 |
| 160 | 3.814514 | 0.0126 | 0.14897 |
| 165 | 3.924656 | 0.0126 | 0.14897 |
| 170 | 4.034798 | 0.0126 | 0.14897 |
| 175 | 4.14494 | 0.0126 | 0.14897 |

Table B

COPOLYMERIZATION CALCULATIONS OF 2% MOLAR MAGME IN VA

1 = MAGME    2= VA

r1= 38.2    r2= .1
m1a= .015 moles    m1b= .0347 moles
m2a= .5 moles    m2b= 1.5 moles
a= 53 g charge    b= 163 g charge

| time | magme | ratio | dm1/dm2 |
|---|---|---|---|
| 0 | | 0.030000 | 0.49523 |
| 5 | .2873765 | 0.0296 | 0.48259 |
| 10 | .5687466 | 0.0296 | 0.47075 |
| 15 | .8444879 | 0.0286 | 0.45968 |
| 20 | 1.114966 | 0.0286 | 0.44936 |
| 25 | 1.380532 | 0.0276 | 0.43976 |
| 30 | 1.641527 | 0.0276 | 0.43085 |
| 35 | 1.898277 | 0.0276 | 0.42259 |
| 40 | 2.151098 | 0.0266 | 0.41496 |
| 45 | 2.400291 | 0.0266 | 0.40794 |
| 50 | 2.646146 | 0.0266 | 0.40149 |
| 55 | 2.88894 | 0.0256 | 0.39559 |
| 60 | 3.128938 | 0.0256 | 0.39021 |
| 65 | 3.366392 | 0.0256 | 0.38533 |
| 70 | 3.601542 | 0.0246 | 0.38091 |
| 75 | 3.834615 | 0.0246 | 0.37694 |
| 80 | 4.065828 | 0.0246 | 0.37338 |
| 85 | 4.295384 | 0.0246 | 0.37021 |
| 90 | 4.523473 | 0.0246 | 0.36742 |
| 95 | 4.750275 | 0.0246 | 0.36497 |
| 100 | 4.975956 | 0.0246 | 0.36283 |
| 105 | 5.200672 | 0.0236 | 0.36100 |
| 110 | 5.424566 | 0.0236 | 0.35944 |
| 115 | 5.647769 | 0.0236 | 0.35812 |
| 120 | 5.8704 | 0.0236 | 0.35704 |
| 125 | 6.092567 | 0.0236 | 0.35616 |
| 130 | 6.314368 | 0.0236 | 0.35546 |
| 135 | 6.535885 | 0.0236 | 0.35493 |
| 140 | 6.757193 | 0.0236 | 0.35453 |
| 145 | 6.978354 | 0.0236 | 0.35425 |
| 150 | 7.199419 | 0.0236 | 0.35407 |
| 155 | 7.420427 | 0.0236 | 0.35396 |
| 160 | 7.641408 | 0.0236 | 0.35391 |
| 165 | 7.862381 | 0.0236 | 0.35389 |
| 170 | 8.083354 | 0.0236 | 0.35389 |
| 175 | 8.304329 | 0.0236 | 0.35389 |

Table C

COPOLYMERIZATION CALCULATIONS OF 3% MOLAR MAGME IN VA

| | | | |
|---|---|---|---|
| 1 = MAGME | | 2= VA | |
| r1= 38.2 | | r2= .1 | |
| m1a= .023 moles | | m1b= .05145 moles | |
| m2a= .5 moles | | m2b= 1.5 moles | |
| a= 56 g charge | | b= 168 g charge | |
| time | magme | ratio | dm1/dm2 |
| 0 | | 0.046000 | 0.86871 |
| m1a= .023 | | m1b= .05145 | |
| 5 | .4324726 | 0.0456 | 0.84376 |
| 10 | .8558736 | 0.0446 | 0.82044 |
| 15 | 1.270753 | 0.0436 | 0.79870 |
| 20 | 1.677643 | 0.0426 | 0.77845 |
| 25 | 2.077059 | 0.0426 | 0.75963 |
| 30 | 2.4695 | 0.0416 | 0.74217 |
| 35 | 2.855446 | 0.0406 | 0.72601 |
| 40 | 3.235362 | 0.0406 | 0.71109 |
| 45 | 3.609694 | 0.0396 | 0.69735 |
| 50 | 3.978871 | 0.0386 | 0.68472 |
| 55 | 4.343307 | 0.0386 | 0.67316 |
| 60 | 4.703396 | 0.0376 | 0.66261 |
| 65 | 5.059516 | 0.0376 | 0.65302 |
| 70 | 5.412027 | 0.0376 | 0.64433 |
| 75 | 5.761275 | 0.0366 | 0.63650 |
| 80 | 6.107584 | 0.0366 | 0.62947 |
| 85 | 6.451265 | 0.0366 | 0.62320 |
| 90 | 6.792609 | 0.0366 | 0.61764 |
| 95 | 7.131892 | 0.0356 | 0.61274 |
| 100 | 7.469371 | 0.0356 | 0.60847 |
| 105 | 7.805286 | 0.0356 | 0.60477 |
| 110 | 8.13986 | 0.0356 | 0.60160 |
| 115 | 8.473302 | 0.0356 | 0.59893 |
| 120 | 8.805798 | 0.0356 | 0.59670 |
| 125 | 9.137521 | 0.0356 | 0.59488 |
| 130 | 9.468625 | 0.0346 | 0.59343 |
| 135 | 9.799248 | 0.0346 | 0.59230 |
| 140 | 10.12951 | 0.0346 | 0.59145 |
| 145 | 10.45952 | 0.0346 | 0.59084 |
| 150 | 10.78935 | 0.0346 | 0.59044 |
| 155 | 11.11908 | 0.0346 | 0.59020 |
| 160 | 11.44876 | 0.0346 | 0.59008 |
| 165 | 11.77842 | 0.0346 | 0.59004 |
| 170 | 12.10808 | 0.0346 | 0.59004 |
| 175 | 12.43775 | 0.0346 | 0.59004 |

It will be apparent from the above that for obtaining the compositions with the good properties according to the invention the various polymerization reactivities of the various monomers should be taken into account. However, the metering system can be easily adjusted by means of the above calculations.

The polymerization technique as such is well known in the art. Preferably emulsion polymerization in an aqueous medium is used.

The present invention also relates to a process for preparing the novel polymer compositions, said process being characterized in that component a) is added to the polymerization medium in such a way that said component is distributed uniformly over the polymeric backbone. As appears from the above the power

feed system is preferred.

Catalytically effective amounts of various free radical forming initiators can be used. In general, these initiators are not critical to the polymerization or performance profile of the composition according to the invention. Examples of initiators are organic or inorganic peroxide or azo compounds. It is also possible to use combinations of reducing and oxidizing agents, e.g. t-butylhydroperoxide sodium metabisulfite.

Especially preferred is the use of inorganic redox systems, e.g. consisting of ammonium, sodium, or potassium persulfate with sodium metabisulfite at a polymerization temperature of 50-65 ° C. Persulfate as such may be used at a reaction temperature of 65-80 ° C. It will be self-evident that the use of reducing agents such as sodium or zinc formaldehyde sulfoxylate, which can contribute to formaldehyde emission, and azo initiators with low crosslinking performance are not preferred. The levels of peroxide used in the system of the invention are well known to persons skilled in the art of emulsion polymerization and is generally between 0.01 and 1 %, preferably 0.05 to 0.5 % by wt. of the monomers used.

In the polymerization system various emulsifying agents may be used, e.g. ionic and/or non-ionic surfactants such as sodium laurylsulfate, sulfonated alkyl benzenes, phosphate esters and alkylphenoxy polyethoxy ethanols or polyoxyethylene condensates may be used. Typical emulsifiers, which are well suited in the polymerization system of the invention, include Aerosol® A-102 (disodium ethoxylated alcohol half-ester of sulfosuccinic acid, available from American Cyanamid Company), Aerosol® A-103 (disodium alkylaryl ethoxylated alcohol half-ester of sulfosuccinic acid, available from American Cyanamid Co.) with ethoxylated nonylphenol (20-40 mol ethylene oxide) or Aerosol® A-102/MA 80 mixture.

In addition to or instead of emulsifying agents protective colloids may be used, e.g. polyvinylalcohol, hydroxyethylcellulose typical buffer systems include sodium bicarbonate or di-ammoniumhydrogen-phosphate, or other synthetic colloids.

The amount of surfactant is normally between 0.5-5 %, based on the weight of the monomers.

In order to maintain the pH of the reaction medium on a desired value, buffering systems can be employed.

The invention also relates to the use of the novel compositions as binders, coatings or adhesives. Such binders are suitable for use as formaldehyde free cross-linker in textile and non-wovens, paper coatings, diaper cover stock, wipers, towels, and carpetings. In a preferred embodiment the invention relates to a self-crosslinking binder composition as defined in the above, in which the copolymer contains

a) 0.5 - 10 % by wt. of MAGMA,
b) 50 - 95 % by wt. of vinylacetate.

The following examples 1-18 illustrate the present invention. It should be noted that examples 1-8 illustrate a conventional emulsion polymerization process, whereas examples 9-18 illustrate the use of a gradual addition of MAGME R in such a way, that homopolymerization of MAGME in the water phase or with itself in the growing copolymer chains is overcome (power feed system).

EXAMPLE 1

A conventional semi-batch emulsion polymerisation process is employed to make the following latex:

VA/BA/NMA 86/12/2 weight ratio

| | | Weight/g |
|---|---|---|
| A. | Reactor charge | |
| | Deionized water | 110.0 |
| | AEROSOL® A-102 (31%) | 6.7 |
| | NaHCO3 (Sodium Bicarbonate) | 1.0 |
| | Methanol | 5.0 |
| | Ammonium persulfate | 2.0 |
| B. | Monomer pre-emulsion | |
| | Vinyl Acetate (VA) | 172.0 |
| | Butyl Acrylate (BA) | 24.0 |
| | AEROSOL R A-102 (31%) | 6.7 |
| | Sodium Metabisulfite | 0.4 |
| | Methanol | 5.0 |
| | Deionized water | 65.0 |
| C. | Delayed portion | |
| | N-methylolacrylamide (NMA),48% | 8.4 |
| | Deionized water | 10.0 |

The initial charges are loaded into the reactor, then purged with $N_2$ for 15 minutes while warmed to 65°C. At 65°C, 15 percent of the monomer pre-emulsion is added to the reactor. After initiation (blue ish tint), the NMA solution is added to pre-emulsion mix. The remaining pre-emulsion monomer is slowly added into the reactor over a time period of 3 hours. After the addition is completed, the mixture is held at 65°C for another 1 hour.

The resulting latex is cooled to room-temperature and filtered into a suitable container.

EXAMPLE 2, 3, 4

Example 1 was repeated except that following were used for the monomer mixture.

| | 1 | 2 | 3 | 4 |
|---|---|---|---|---|
| VA | 172 | 172 | 172 | 172 |
| BA | 24 | 24 | 24 | 24 |
| NMA (48%) | 8.4 | -- | 8.4 | -- |
| MAGME R | -- | 6.45 | -- | 6.45 |
| HEMA | -- | -- | 4.6 | 4.6 |

EXAMPLE 5, 6, 7, 8

Example 1 was repeated except that following were used for the monomer mixture.

| | 5 | 6 | 7 | 8 |
|---|---|---|---|---|
| VA | 172 | 172 | 172 | 172 |
| BA | 24 | 24 | 24 | 24 |
| NMA (48%) | 16.8 | -- | 16.8 | -- |
| MAGME $^R$ | -- | 12.9 | -- | 12.9 |
| HEMA | -- | -- | 9.2 | 9.2 |

EXAMPLE 9

In this example we use a process which require gradual (power feed) addition of MAGME $^R$ in such a manner to overcome homopolymerisation of MAGME $^R$ in the water phase or with itself in the growing copolymer molecular chains.

Power feed VA/BA/MAGME/HEMA emulsion latex

Monomer mixture of Example 8 was repeated except that following process and procedure were used.

| | | Weight/g |
|---|---|---|
| A. | Reactor charge | |
| | Deionized water | 110.0 |
| | AEROSOL $^R$ A-102 (31%) | 6.7 |
| | NaHCO3 (Sodium Bicarbonate) | 1.0 |
| | Methanol | 5.0 |
| | Ammonium persulfate | 2.0 |
| B. | Monomer power-feed addition | |
| | (1) VA | 86 |
| | BA | 12 |
| | HEMA | 1 |
| | MAGME $^R$ | 2 |
| | (2) VA | 86 |
| | BA | 12 |
| | HEMA | 8.2 |
| | MAGME $^R$ | 10.9 |
| | Methanol | 5.0 |
| C. | Catalyst addition | |
| | Deionized water | 75 |
| | Sodium Metabisulfite | 0.4 |
| | AEROSOL $^R$ A-102 (31%' | 6.7 |

The initial charges are loaded into the reactor then purges with $N_2$ for 15 minutes while warmed to 65°C. At 65°C, 151 of monomer charge B(1) is added into the reactor. After initiation (blue ish tint), the remaining monomer B(1) is slowly added to the reactor over a time period of 3 hours, while monomer B(2) is continuously feeded into the monomer mix B(1). The catalyst solution is at the same time added in a period of 3 hours. After the additions are completed, the mixture is held at 65°C for another 1 hour, whereafter the latex is cooled and filtered into a suitable container.

EXAMPLE 10, 11, 12

Example 9 was repeated except that these times the monomer mixture for B(1) and B(2) was calculated

from VA/MAGME reactivity ratio.

$$\frac{d\,M_1}{d\,M_2} = \frac{M1 \times (_{r1}\,M_1 + M_2)}{M2 \times (_{r2}\,M_2 + M_1)}$$

| | 10 | 11 | 12 |
|---|---|---|---|
| B(1) | | | |
| VA | 43 | 43 | 43 |
| BA | 6 | 6 | 6 |
| MAGME R | 4 | 2.6 | 1.3 |
| HEMA | 2.5 | 1.6 | 0.8 |
| B(2) | | | |
| VA | 129 | 129 | 129 |
| BA | 18 | 18 | 18 |
| MAGME R | 8.9 | 6.0 | 3.0 |
| HEMA | 5.7 | 4.6 | 2.3 |

EXAMPLE 13

A latex according to following formulations is made:

| | Example 13 | EXAMPLE 14 | EXAMPLE 15 |
|---|---|---|---|
| A. Reactor charge | | | |
| Deionized water | 111.0 | 111.0 | 111.0 |
| FeCl3 1% | 0.85 | 0.85 | 0.85 |
| Formic Acid | 0.055 | 0.055 | 0.055 |
| AEROSOL R A-102 31% | 9.7 | 9.7 | 9.7 |
| Methanol | 5.0 | 5.0 | 5.0 |
| Potassium persulfate | 1.0 | 1.0 | 1.0 |
| Initial monomers | | | |
| VA | 16.0 | 16.0 | 16.0 |
| BA | 2.0 | 2.0 | 2.0 |
| MAGME R | 0.3 | 0.3 | 0.3 |
| Sodium Metabisulfite | 0.1 | 0.1 | 0.1 |
| Deionized water | 10 | 10 | 10 |

Power feed - monomer addition

| | 13 | 14 | 15 |
|---|---|---|---|
| B(1) | | | |
| VA | 50 | 50 | 50 |
| BA | 8 | 8 | 8 |
| MAA | 0.6 | 0.6 | 0.6 |
| MAGME R | 2.0 | 2.6 | 2.0 |
| B(2) | | | |
| VA | 100 | 100 | 100 |
| BA | 16 | 16 | 16 |
| MAA | 1.4 | 1.4 | 1.4 |
| MAGME R | 5.5 | 5.5 | 5.5 |
| Methanol | 5.0 | 5.0 | 5.0 |
| C) Catalyst addition | | | |
| Deionized water | 65 | 65 | 65 |
| SMBS | 0.5 | 0.5 | 0.5 |
| Sodium Bicarbonate | 0.9 | 0.9 | 0.9 |
| Diammonium hydrogen phosphate | 0.3 | 0.6 | 1.0 |
| AEROSOL R MA-80 (80%) | 2.5 | 2.5 | 2.5 |

The initial charges are loaded into the reactor then purged with $N_2$ for 15 min. while warmed to 65°C. When the contents of the polymerisation kettle reach 60°C, the nitrogen flow is reduced to a minimum and the initial monomer mix plus catalyst for initiation are added to the reactor. After initiation (bluewish tint) and maximum exotherm, the additions of monomer and catalyst are started at a rate of 1.5 and 0.4 parts per minute, respectively. Total addition time required is 3 hours. Following completion of the monomer and catalyst addition, the latex is held at 60°C for 1 hr., then cooled and filtered into a suitable container.

EXAMPLE 16, 17, 18

Example 13 was repeated except that the equal mole of hydroxy ethylmethacrylate monomer (HEMA) included, and following monomers mixture are used in B(1) and B(2) addition.

| B (1) | Example 16 | EXAMPLE 17 | EXAMPLE 18 |
|---|---|---|---|
| VA | 50 | 50 | 50 |
| BA | 8 | 8 | 8 |
| MAA | 0.6 | 0.6 | 0.6 |
| MAGME R | 2.0 | 2.0 | 2.0 |
| HEMA | 1.4 | 1.4 | 1.4 |
| B1(2) | | | |
| VA | 100 | 100 | 100 |
| BA | 16 | 16 | 16 |
| MAA | 5.5 | 5.5 | 5.5 |
| HEMA | 4.0 | 4.0 | 4.0 |
| Methanol | 5.0 | 5.0 | 5.0 |

EXAMPLE 19

The resulting emulsions of Example 1 to 18 has following (Table 1,2) physical properties, which are comparable to prior art latex used in industrial applications.

EXAMPLE 20

The emulsions of Example 1 to 18 with or without various postadditives catalyst are drawn on melinex polyester film (100 µm) using 100 µm applicator. The films were air-dried (i.e. at room temperature for 18-24 hrs.). Then cured for 3 and 5 minutes at 130 ° C in convected oven.

The cured and uncured films were analyzed for acetone insolubles or solubles (i.e. indicative degree of solvent resistant or dry cleaning) and methylethyl ketone (MEK) swell index according to the following procedures.

Procedure of measurement of aceton insoluble parts of a film

A catalyzed and/or non-catalyzed film of abt. 100 micron thickness is laid down on a glass plate and dried at 250 ° C for 24 hours.

The film is split into 3 samples of abt. 1 gram and cured for resp. 0, 3, and 5 minutes at 130 ° C whereafter the samples are accurately weighed, chopped into little pieces and refluxed for two hours in 100.0 ml aceton.

After cooling down of the aceton, a folded Whatmann No. 540 filter is placed in the (closed) bottle and the liquid is allowed to filter through.

A 10 ml sample is taken out of the filter, dried at 130 ° C and accurately weighed, whereafter the percentage insolubles can be calculated.

Formula:

$$I = \frac{F - (S * 10)}{F} * 100\ \%$$

where:

I = insoluble parts of the film (%)
F = weight of the film (g)
S = weight of the soluble parts (g)

Procedure swelling ratio and insolubles in MEK

Films of ca. 100 µm are dried for 24-48 hours. Samples of 2.0 x 2.0 cm (70-200 mg) are cut from the films, accurately weighed (W1) and cured for 0' and 5' at 130 ° C. After being soaked in MEK for 60', the samples are dried between a tissue, weighed again in an aluminium dish (W2), 30' dried at 130 ° C and finally weighed again (W3).

Swell ratio = W2 / W1
% insolubles = W3 / W1 * 100 %.

Table 3, 4, 5 provide data on acetone insolubles and MEK swell index plus insolubles for film of Example 1 to 18 emulsions. These results show that emulsion copolymers of vinyl acetate and MAGME prepared according to present invention can be self-crosslinked with comparable results to prior art products, but having advantages of generating no formaldehyde or very small amount i.e. (1-10 ppm).

## EVALUATION OF ALL MAGME/VA LATICES

Tabel 1: Latex type of all batches

| Ex. No. | #[a] | Composition[b] VA/BA/MAA/ MAGME/HEMA | Conc.M1[c] MAGME/ HEMA | Conc.M2[c] MAGME/ HEMA | addition[d] type | buffer[e] type |
|---|---|---|---|---|---|---|
| 1 | 100A* | 89.9/8.4/-/1.7/- | | | E | N |
| 2 | 100B | 89.9/8.4/-/1.7/- | - | - | E | N |
| 3 | 104A* | 88.5/8.3/-/1.6/1.6 | | | E | N |
| 4 | 104B | 88.5/8.3/-/1.6/1.6 | - | - | E | N |
| 5 | 111A* | 88.4/8.3/-/3.3/- | | | E | N |
| 6 | 111B | 88.4/8.3/-/3.3/- | - | - | E | N |
| 7 | 112A* | 85.7/8.0/-3.2/3.1 | | | E | N |
| 8 | 112B | 85.7/8.0/-/3.2/3.1 | - | - | E | N |
| 9 | 123 | 85.7/8.0/-/3.2/3.1 | 1.0/0.7 | 5.2/5.2 | P | N |
| 10 | 126 | 85.7/8.0/-/3.2/3.1 | 3.9/3.8 | 3.0/3.0 | P | N |
| 11 | 134 | 89.4/8.4/-/1.1/1.1 | 1.3/1.1 | 1.0/1.0 | P | N |
| 12 | 135 | 87.5/8.2/-/2.2/2.2 | 2.6/2.1 | 2.0/2.1 | P | N |
| 13 | 146 | 88.1/8.9/1.0/2.0/- | 1.5/- | 2.4/- | P | N,P |
| 14 | 148 | 88.1/8.9/1.0/2.0/- | 1.5/- | 2.4/- | P | N,2P |
| 15 | 149 | 88.1/8.9/1.0/2.0/- | 1.5/- | 2.4/- | P | N,3P |
| 16 | 155 | 86.4/8.8/1.0/1.9/1.9 | 1.5/1.4 | 2.3/2.3 | P | N,P |
| 17 | 158 | 86.4/8.8/1.0/1.9/1.9 | 1.5/1.4 | 2.3/2.3 | P | N,2P |
| 18 | 159 | 86.4/8.8/1.0/1.9/1.9 | 1.5/1.4 | 2.3/2.3 | P | N,3P |

a : # 100 - 135 : 2 phm Aerosol A102
1 phm AP, 0.2 phm SMBS
# 146 - 159 : 1.5 phm Aerosol A102, 0.5 phm Aerosol MA80
0.5 phm KP, 0.3 phm SMBS, $FeCl_3$/formic acid
All batches 51 % solids

b : Molar ratio's of monomers

c : Molar concentration (%) of MAGME and HEMA in addition

d : E = pre-emulsion type addition
P = power feeded solution type addition

e : N = Sodiumbicarbonate
P = Di-ammonium hydrogenphosphate
2P = Di-ammonium hydrogenphosphate, double amount
3P = Di-ammonium hydrogenphosphate, triple amount

* : Instead of MAGME, NMA is used

Tabel 2

| Basic analysis of all batches | | | | | | | | |
|---|---|---|---|---|---|---|---|---|
| Ex. No. | # | Conv. (%) | pH | PS (nm) | Visc. (mPa.s) | coat (g) | grit 60# (g) | grit 200# (%) |
| 1 | 100A | 95.8 | 4.55 | 218 | 62 | 0.2 | 0.1 | 0.0448 |
| 2 | 100B | 99.2 | 4.36 | 379 | 32.5 | 0.3 | 0.1 | 0.0393 |
| 3 | 104A | 98.8 | 4.52 | 237 | 85.5 | 0.4 | 0.1 | 0.0161 |
| 4 | 104B | 99.6 | 4.33 | 288 | 46 | 0.3 | 0.1 | 0.0158 |
| 5 | 111A | 97.2 | 4.64 | 279 | 82 | 0.5 | 0.2 | 0.0177 |
| 6 | 111B | 97.3 | 4.37 | 299 | 63 | 0.5 | 0.8 | 0.0414 |
| 7 | 112A | 98.2 | 4.63 | 231 | 756 | 0.6 | 0.4 | 0.1015 |
| 8 | 112B | 99.4 | 4.64 | 233 | 132 | 0.4 | 0.2 | 0.0328 |
| 9 | 123 | 94.1 | 4.71 | 325 | 45 | 0.4 | 0.6 | 0.2177 |
| 10 | 126 | 95.8 | 4.70 | 304 | 91 | 0.2 | 0.3 | 0.0448 |
| 11 | 134 | 96.8 | 4.73 | 287 | 33 | 0.3 | 0.4 | 0.0225 |
| 12 | 135 | 98.8 | 4.75 | 260 | 67 | 0.7 | 1.0 | 0.1094 |
| 13 | 146 | 96.3 | 5.45 | 233 | 83 | 1.0 | 0.6 | 0.0350 |
| 14 | 148 | 99.8 | 5.54 | 176 | 394 | 0.3 | 0.4 | 0.1808 |
| 15 | 149 | 96.5 | 5.62 | 261 | 208 | 0.2 | 0.3 | 0.0760 |
| 16 | 155 | 98.8 | 5.40 | 240 | 758 | 0.3 | 0.8 | 0.1246 |
| 17 | 158 | 97.3 | 5.76 | 212 | 258 | 0.6 | 0.9 | 0.2060 |
| 18 | 159 | 97.5 | 5.70 | 174 | 1,476 | 0.4 | 0.3 | 0.1284 |

Tabel 3: Aceton insolubles of all batches:

| Ex No. | # | non-cat | | | pH3 cat[1] | | | pTSA-cat[2] | | |
|---|---|---|---|---|---|---|---|---|---|---|
| | | A/D | 3'/130° | 5'/130° | A/D | 3'/130° | 5'/130° | A/D | 3'/130° | 5'/130 |
| 1 | 100A | 0 | 1 | 11 | 5 | 44 | 72 | 19 | 78 | 98 |
| 2 | 100B | 0 | 0 | 0 | 0 | 0 | 1 | 3 | 1 | 5 |
| 3 | 104A | 0 | 1 | 24 | 48 | 70 | 85 | 60 | 78 | 85 |
| 4 | 104B | 0.6 | 0.6 | 0.6 | 0 | 0 | 0.8 | 4 | 46 | 60 |
| 5 | 111A | 3 | 0 | 40 | 17 | 34 | 75 | 60 | 77 | 91 |
| 6 | 111B | 4 | 0 | 1 | 2 | 0 | 31 | 8 | 4 | 8 |
| 7 | 112A | 13 | 26 | 28 | 30 | 40 | 63 | 64 | 75 | 82 |
| 8 | 112B | 2 | 0 | 0 | 3 | 2 | 2 | 0 | 25 | 63 |
| 9 | 123 | 0 | 0 | 31 | 1 | 0 | 0 | 10 | 58 | 81 |
| 10 | 126 | 4 | 10 | 65 | 4 | 36 | 57 | 10 | 71 | 81 |
| 11 | 134 | 0 | 0 | 13 | 1 | 7 | 26 | 0 | 83 | 84 |
| 12 | 135 | 0 | 0 | 20 | 0 | 18 | 57 | 16 | 84 | 87 |
| 13 | 146 | 8 | 36 | 18 | 12 | 16 | 34 | 49 | 70 | 86 |
| 14 | 148 | 0 | 2 | 4 | | | | 5 | 77 | 83 |
| 15 | 149 | 48 | 40 | 26 | | | | 34 | 21 | 24 |
| 16 | 155 | 8 | 39 | 41 | | | | 28 | 73 | 76 |
| 17 | 158 | 16 | 29 | 32 | | | | 61 | 75 | 78 |
| 18 | 159 | 16 | 43 | 41 | | | | 0 | 47 | 57 |

[1]: pH adjusted with phosphoric acid to pH=3
[2]: 1% pTSA (on latex) added

Tabel 4: MEK Swell of all batches:

| Ex No | # | non-cat A/D | non-cat 5'/130° | ptsa-cat[1] A/D | ptsa-cat[1] 5'/130° |
|---|---|---|---|---|---|
| 1 | 100A | x | 13.0 | 6.5 | 4.0 |
| 2 | 100B | x | x | x | 9.8 |
| 3 | 104A | x | 7.0 | 4.5 | 3.2 |
| 4 | 104B | x | x | x | 7.4 |
| 5 | 111A | 7.4 | 9.4 | 3.4 | 2.4 |
| 6 | 111B | x | x | x | 15.6 |
| 7 | 112A | 5.7 | 5.7 | 2.2 | 2.1 |
| 8 | 112B | x | x | x | 4 |
| 9 | 123 | x | x | 8.6 | 4.3 |
| 10 | 126 | 13.2 | 8.1 | 11.6 | 5.2 |
| 11 | 134 | x | x | x | 8.9 |
| 12 | 135 | 10.7 | 38.1 | 29 | 4.1 |
| 13 | 146 | 27.2 | 31.1 | 21.3 | 9.5 |
| 14 | 148 | 9.7 | 4.4 | 27 | 7.38 |
| 15 | 149 | 7.9 | 37.7 | 26.7 | 24 |
| 16 | 155 | 20 | 12 | 12 | 3.1 |
| 17 | 158 | 40 | 16 | 15 | 4.1 |
| 18 | 159 | 21.5 | 15 | 13 | 6.6 |

[1] : 1% pTSA (on latex) added

Tabel 5: MEK Insolubles of all batches:

| Ex No | # | non-cat A/D | non-cat 5'/130° | ptsa-cat[1] A/D | ptsa-cat[1] 5'/130° |
|---|---|---|---|---|---|
| 1 | 100A | 0 | 73 | 81 | 89 |
| 2 | 100B | 0 | 0 | 0 | 55 |
| 3 | 104A | 0 | 75 | 85 | 90 |
| 4 | 104B | 0 | 0 | 0 | 82 |
| 5 | 111A | 26 | 58 | 66 | 91 |
| 6 | 111B | 0 | 0 | 0 | 47 |
| 7 | 112A | 34 | 54 | 71 | 88 |
| 8 | 112B | 0 | 0 | 0 | 87 |
| 9 | 123 | 0 | 0 | 53 | 86 |
| 10 | 126 | 46 | 80 | 68 | 93 |
| 11 | 134 | 0 | 0 | 0 | 86 |
| 12 | 135 | 62 | 59 | 30 | 90 |
| 13 | 146 | 63 | 78 | 43 | 73 |
| 14 | 148 | 96 | 27 | 43 | 68 |
| 15 | 149 | 75 | 86 | 72 | 84 |
| 16 | 155 | 39 | 52 | 44 | 80 |
| 17 | 158 | 47 | 42 | 30 | 82 |
| 18 | 159 | 38 | 51 | 42 | 67 |

[1] : 1 % pTSA (on latex) added

## Claims

1. A composition comprising an emulsion copolymer of
   a) 0.1-25 % by wt. of an alkyl acrylamidoglycolate alkylether having the formula wherein

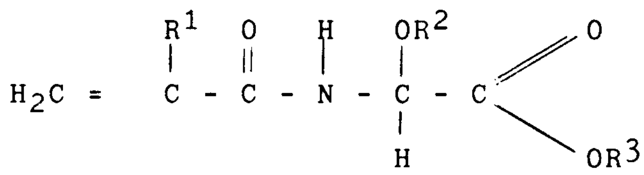

(I)

$R^1$ is hydrogen or methyl, preferably hydrogen;
$R^2$ and $R^3$ are independently selected from $C_1$-$C_6$ alkyl and $C_5$-$C_6$ cycloalkyl, preferably $C_1$-$C_4$ alkyl;
b) 50-95 % by wt. of vinylacetate;
c) 0.1-25 % by wt. of functional hydroxy containing monomer;
d) 0-50 % by wt. of another vinyl monomer,
the amounts of the components a)-d) being calculated on the weight of the total composition.

**2.** Composition according to claim 1 comprising
0.5-10 % by wt. of component a);
80-90 % by wt. of component b);
0.5-10 % by wt. of component c);
5-40 % by wt. of component d);
the amounts of the components a)-d) being calculated on the weight of the total composition.

**3.** The composition according to claim 1 or 2, wherein component a) is methylacrylamidoglycolate methylether (MAGME);
component c) is 2-hydroxyethylacrylate (2EHA) and/or hydroxyethylmethacrylate (HEMA) or another external hydroxy containing compound selected from polyol, polyvinylalcohol and cellulosic compounds;
component d) is an alkylester of acrylic or methacrylic or maleic acid such as butylacrylate (BA), methylmethacrylate (MMA), dibutylmaleate (DBM), vinyl chloride, vinylidene chloride, butadiene, ethylene and/or propylene.

**4.** Use of compositions according to any of the preceding claims as binders, coatings or adhesives.

**5.** A process for preparing a polymer composition according to any of claims 1-4, characterized in that component a) is added to the polymerization medium in such a way, that said component is distributed uniformly over the polymeric backbone.

**6.** A self-crosslinking binder composition according to claim 1 in which the copolymer contains
a) 0.5 - 10 % by wt. of MAGME,
b) 50 - 95 % by wt. of vinylacetate.

European Patent Office

# EUROPEAN SEARCH REPORT

Application Number

**EP 90 20 2428**

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X,D | US-A-4 743 498 (KEDROWKSI et al.)<br>* The whole document *<br>– – – | 1-6 | C 08 F 218/08 |
| X,D | EP-A-0 302 588 (REICHHOLD CHEMICALS)<br>* Page 3, line 23 - page 5, line 19; claims *<br>– – – – – | 1-4,6 | |

TECHNICAL FIELDS SEARCHED (Int. Cl.5)

C 08 F

The present search report has been drawn up for all claims

| Place of search | Date of completion of search | Examiner |
|---|---|---|
| The Hague | 10 May 91 | ANDRIOLLO G.R. |

CATEGORY OF CITED DOCUMENTS

X : particularly relevant if taken alone
Y : particularly relevant if combined with another document of the same catagory
A : technological background
O : non-written disclosure
P : intermediate document
T : theory or principle underlying the invention

E : earlier patent document, but published on, or after the filing date
D : document cited in the application
L : document cited for other reasons

& : member of the same patent family, corresponding document